# EUROPEAN PATENT SPECIFICATION

(11) **EP 1 897 778 B1**
(45) Date of publication and mention of the grant of the patent: **11.05.2011**
(21) Application number: 05750103.3
(22) Date of filing: 13.05.2005
(51) Int. Cl.: B61L 1/06, E01B 9/28

(54) **METHOD AND DEVICE FOR CHECKING THE TIGHTNESS OF RAILWAY TRACK ANCHORS**
VERFAHREN UND VORRICHTUNG ZUM ÜBERPRÜFEN DER DICHTHEIT VON EISENBAHNGLEISANKERN
PROCEDE DE VERIFICATION DE L'ETAT DE SERRAGE DE FIXATIONS DE VOIES FERROVIAIRES

(43) Date of publication of application: 12.03.2008
(73) Proprietor: Mondragon Soluciones, S.L.U., 46550 Albuixech (ES)
(72) Inventor: VIVES CLAVEL, Juan, E-46550 Albuixech (ES)
(74) Representative: Carpintero Lopez, Francisco
(86) International application number: PCT/ES2005/000268
(87) International publication number: WO 2006/120258

(56) References cited:
- EP-A1- 0 344 145
- EP-A1- 0 468 397
- EP-A1- 1 521 072
- WO-A1-09/607577

## Description

### OBJECT OF THE INVENTION

The present invention relates to a method and a railroad plant for automatic confirmation of the state of tightness of fastenings of railroad tracks, whereby from a train that is traveling over a track it is possible to pick up a signal from each of the fastenings, which indicates if the degree of tightness of said fastenings is appropriate or if on the contrary the fastening is not appropriate because it is either slack or damaged.

To this end a device object of the invention comprises a pressure sensor element and at least one electrically conducting element connected to said pressure sensor, whereby a variation is produced of at least one electric magnitude proportional to the pressure of tightness present in at least one point in said fastening during the passage of a train.

### BACKGROUND OF THE INVENTION

The upkeep costs of railroad tracks increase with the density of traffic, speed, axle load and decrease in the weight of the rail, the first of these being the main cause of deterioration of the tracks, by acting through the vertical and lateral dynamic total loads that it transmits, being transformed into fatigue and wear of the different devices or elements that form part of the fastenings of the tracks, as well as in the degradation of their geometry. Said degradation will redound therefore, in the quality and in the safety of the track (defined by the standard deviations in the level, alignment, gage, etc.), the speed of the trains and the maximum loads per axle.

Conventionally to check and verify the state of fastening of the railroad tracks, the operations are performed manually or by means of machinery *in situ,* that is, the operatives are displaced periodically along the tracks, reviewing among other aspects, the tightness of the screws that cooperate in the fastening devices of said tracks, taking the opportune readings of torque, load or torsion and proceeding to tighten those they consider deficient.

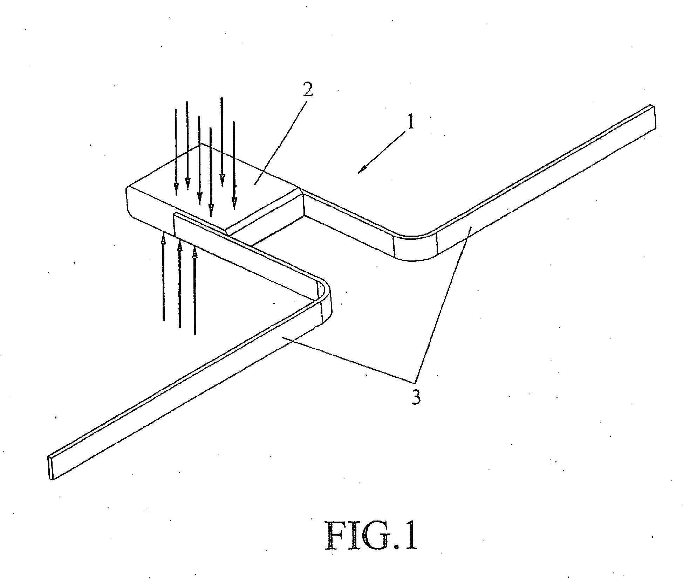

In railroad plant the employment is known of insulating plates for the resilient fastening of rails on crossties. Some of these plates are described in the following Spanish patents ES-2.115.427 relative to an insulating plate of resilient sheet type and ES-2.160.529 relative to an elbowed type with clip. Other known elements participant in railroad plant consist of an anchoring sleeve like that described in the Spanish patent ES-2.125.603, or a resilient sole plate for railroad track such as that described in the Spanish patent ES-2.156.564. A known railroad installation is that shown in figure 1 of the patent ES-2.115.427 for an insulating plate of resilient sheet type.

The European Patent EP-0.344.145 A1 describes a device for determining the condition of railway switches or railway crossings.

The German patent DE-4432329A1 refers to a system for detecting errors in the track bed, screws breaks, errors at the rail, or at the vehicles that can lead to major accidents in a railroad installation.

### DESCRIPTION OF THE INVENTION

The present invention resolves the technical problem outlined, by means of the inventive material included in the enclosed independent claims 1 and 13.

In more specific terms, a first aspect of the invention relates to a (non-claimed) sensor device for confirmation of the state of tightness of fastenings of railroad tracks which comprises a pressure sensor element and at least one electrically conducting element connected to said pressure sensor.

In the present invention the term fastenings, should be understood to signify any collection of elements which allow the securing in a point of a rail or line, to a railway crosstie.

The pressure sensor element can be formed by a material with piezoelectric properties, or it can consist of a capacitor of variable capacitance, or another type of sensor which allows the pressure to be determined in a point of the fastening. Furthermore, the conductive element is capable of radiating and/or receiving electromagnetic energy.

Another aspect of the invention relates to an (non-claimed) insulating plate for the fastening of rails on crossties, which incorporates a device like that previously described. The sensor device formed by the pressure sensor element and the radiant element, can be embedded in the plate itself as a result of the molding of the said plate, or it can be coupled later to the same in a cavity foreseen for such purpose.

The invention also relates to conventional railroad plant formed by rails mounted on crossties in cooperation with insulating fastening plates and screws passing through said plates, which incorporates the previously described sensor device, which can be coupled in a point of the fastening which is considered appropriate to determine the state of tightness of the same.

For example, the pressure sensor can be in contact with the insulating plate and the crosstie, or between the insulating plate and the rail, or between the insulating plate and a fastening clip, or between the resilient plate and a resilient sheet.

Another aspect of the invention relates to a method to check the state of tightness of fastenings of railroad tracks, in which a variation is produced of at least one electric and/or magnetic magnitude proportional to or indicative of the pressure of tightness present in at least one point in said fastening during or after the passage of a train. The variation of the electric magnitudes, can consist in a variation of an emission of electromagnetic energy, in a variation of frequency, current or amplitude of a signal, originated by the passage of a train over a fastening which is transformed into a variation of pressure on a pressure sensor located in the fastening.

By acquisition of these variations of the electric and/or magnetic magnitudes produced in each fastening, it is possible to determine the forces to which the fastening is subjected and in consequence know if the degree of tightness of the same is appropriate. The acquisition of these electric and/or magnetic variations can be obtained from a receiver located for example in a train which is traveling on the track.

The present invention manages to avoid the highly laborious work that is signified by manually checking the plant, due to the number of kilometers of track which must be periodically inspected *in situ*, reducing the cost of upkeep and maintenance of the same considerably, as well as providing evidence of the track security both to the official bodies and to the users that employ these means of transport. Since confirmation of the state of the fastenings can be performed automatically with a train running normally, the supervision of the track can be carried out in a continuous manner during the day whereby any damage in a fastening is rapidly detected.

### DESCRIPTION OF THE DRAWINGS

To complete the description that is being made and with the object of assisting in a better understanding of the characteristics of the invention, in accordance with a preferred example of practical embodiment of the same, this description is accompanied with a set of drawings, as an integral part thereof, wherein by way of illustration and not restrictively, the following has been represented:
Figure 1. - It shows a view in perspective of an embodiment of a device with piezoelectric sensor for confirmation of the state of tightness of fastenings of railroad tracks object of the invention. Arrows are used to illustrate the variation in compression which said sensor undergoes.
Figure 2. - It shows an electric schematic corresponding to the operation of the device of figure 1.
Figure 3. - It shows a view in perspective of another embodiment of a device with capacitive sensor for confirmation of the state of tightness of fastenings of railroad tracks.
Figure 4. - It shows in figure 4b an electric schematic corresponding to the operation of the device of figure 3. In figure 4a the operation of the variable capacitor is represented.
Figure 5. - It shows a view in front cross-section of a known track installation which comprises an insulating plate of the CLIP type and fastening clip, in which the forces are indicated with arrows to which each element of the installation is subjected during the passage of a train. In the left half of said figure the state of the elements is represented in the exact moment in which they support the weight of a locomotive axle, and in the right half the state of the elements in their normal state after the removal of said weight.
Figure 6. - It shows a similar representation to that of figure 5 but with insulating plates of the Resilient Sheet type.
Figure 7. - It shows in figure 7a a view in perspective of an insulating plate together with a screw inserted in the same, as well as the device object of the invention mounted on the insulating plate. Figure 7b shows an enlarged detail of the relative disposition of the device and screw of figure 7a.
Figure 8. -It shows in figure 8a a view in perspective and in figure 8b a view in top plan of an insulating plate with a device with piezoelectric sensor embedded in said plate.
Figure 9. - It shows in figure 9a a view in perspective of an assembly formed by an insulating plate, screw and securing nut, metallic Resilient Sheet and enclosure with sensor device in coupling position. Figure 9b shows a view in perspective and enlarged of the enclosure with piezoelectric sensor and radiant element.
Figure 10. - It shows a schematic diagram illustrating the method for confirmation of the state of tightness of fastenings of railroad tracks, based on a self-powered system, that is, when a piezoelectric sensor is used.
Figure 11. - It shows a schematic diagram illustrating the method for confirmation of the state of tightness of fastenings of railroad tracks, based on an externally powered system, that is, when a capacitive sensor is used and an electromagnetic transmitting unit necessary for powering the sensor.

### PREFERRED EMBODIMENT OF THE INVENTION

In the light of figure 1 it can be observed how in one of the possible embodiments of the invention, the (non-claimed) device (1) for confirmation of the state of tightness of fastenings of railroad tracks, comprises a pressure sensor element (2) and at least one electrically conducting element (3) capable of radiating and/or receiving electromagnetic energy, which is connected electrically to said pressure sensor (2). In the case of figure 1 the pressure sensor (2) consists of a material with piezoelectric properties with rectangular prismatic form, which is intended to receive an impact of pressure on the passage of the train over the track. In the embodiment of figure 1 the conductive element (3) consists of a dipole antenna formed by two arms in "L" arranged symmetrically to each other and each connected to a face of the sensor (2).

The material with piezoelectric properties can be for example quartz crystal, Rochelle salt, or ceramic or polymeric materials.

In the case of the conductive element it can consist in: an electrode, plate, open or closed loop, coil, a layer of conducting ink or paste. The conductive element can be for example an antenna of the types: monopole, dipole, vertical monopole, dipole parallel to a conductive plane, frame antenna, spiral antenna, coplanar antenna, radiofrequency antenna, planar antenna, or printed antenna.

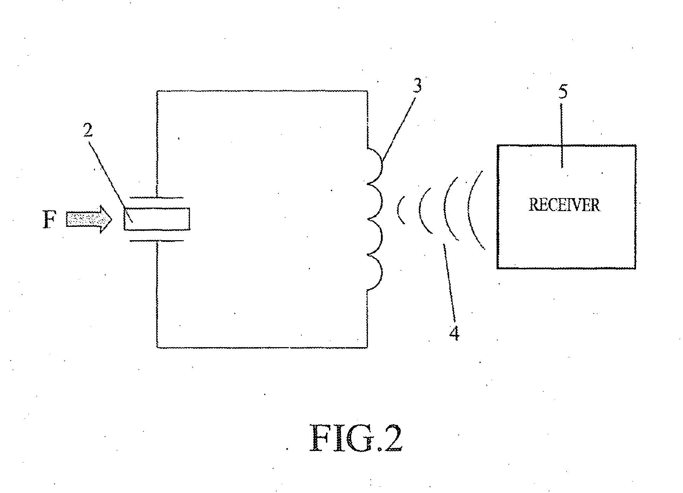

The operation of the sensor device (1) has been illustrated in figure 2, where it is seen that an impulse of force F applied to the pressure sensor (2), piezoelectric in this case, produces a pulse of electric voltage in the conductive element (3), be it an antenna or a coil, which produces an electromagnetic field (4) which will be proportional to the magnitude of said impulse of force. The aforementioned impulse of force on the sensor (2) is caused by the compression-relaxation of the resilient sole plate produced by a wheel of a train on passing over the fastening of the track in which the sensor device (1) is located.

In a railroad track installation according to the invention, that is equipped with a sensor device (1), the aforementioned electromagnetic field (4), can be picked up by a receiving unit (5) which can be installed for example in a railroad track maintenance vehicle adapted for such a use or in a conventional train running normally over the track. The implementation of the receiving unit (5) is obvious for any expert in the matter, for which reason it is not necessary to enter into constructive details of the same.

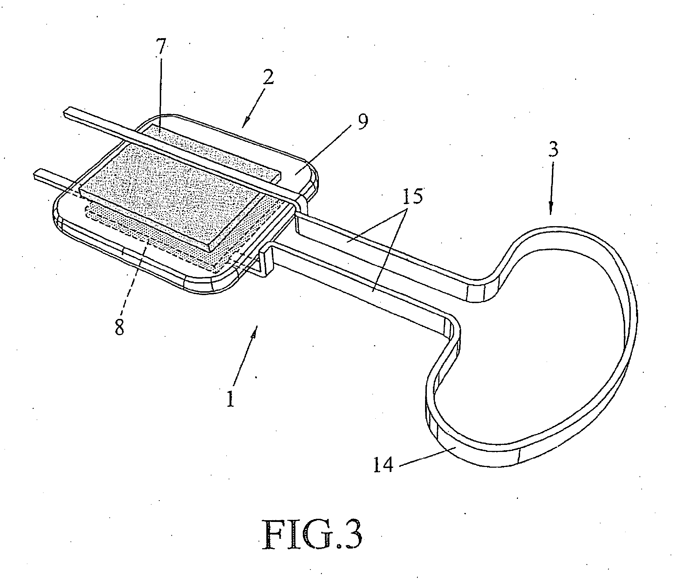

Another possible practical (non-claimed) embodiments of the invention has been represented in figure 3, and it consists of a sensor device (1) in which the pressure sensor element (2) consists of a capacitor of variable capacitance formed by two conducting plates which form respectively an upper electrode (7) and a lower electrode (8) separated from the upper one. A dielectric material (9) is located between the two electrodes (7), (8), which can consist for example of air, polymeric materials such as Polystyrene, Polyester, Polycarbonate, etc.

In the same example of (non-claimed) embodiment as figure 3, the conductive element 3 is an antenna which forms a loop (14) and individual arms (15) which are connected electrically with the electrodes (7) and (8). The assembly formed by the sensor (2) and the conductive element (3) is substantially planar, the object being to facilitate the installation thereof in the fastening of the railroad track.

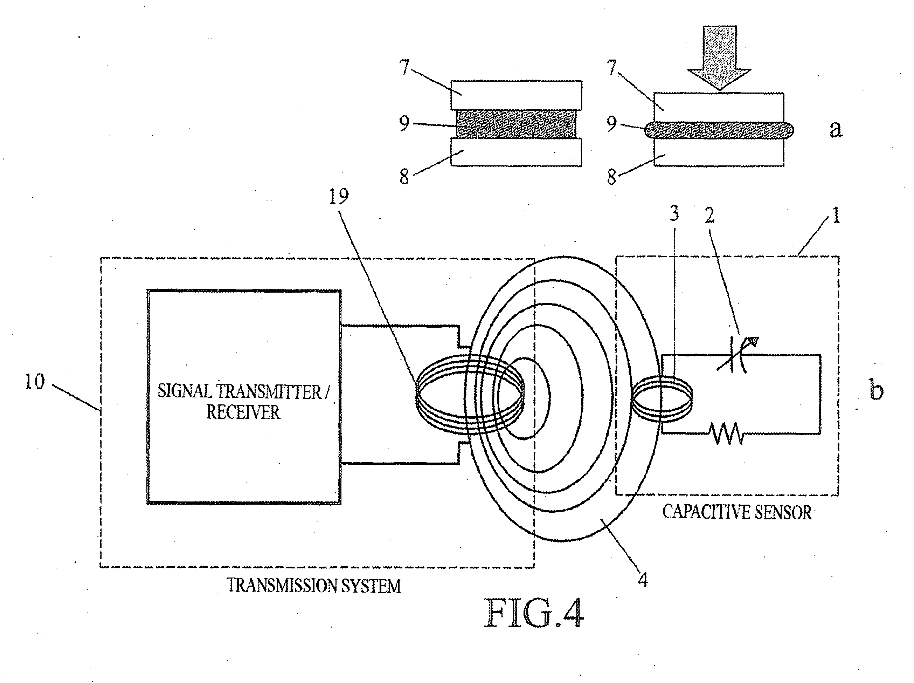

The plates which define the electrodes (7) and (8) can be separated or distanced from each other, so the separating gap depends on the pressure to which they are subjected in their disposition in a fastening of the track, in the idle state or during the passage of a train. As is appreciated in figure 4a in the separation or approximation of the electrodes (7) and (8) a variation is produced in the capacitance of the capacitor and a deformation of the volume occupied by the dielectric (9).

When the train passes over, the resilient sole plate is compressed releasing pressure in the insulating plate whereby the electrodes are separated. As the wheel of the train moves away from the fastening, the resilient sole plate recovers its thickness whereby the pressure in the insulating plate is increased, producing the approximation of the electrodes. The electrode plates are fastened to a substrate (in this case the plastic of the insulating plate) and the plates are moved next to the substrate when the latter recovers its initial position (when the load disappears) due to the resiliency of the material (in this case that of the plastic).

These changes in the capacitance of the capacitor are indicative of the forces of tightness present in the fastening of the track, and therefore allow the state of tightness of said fastening to be determined. These changes in the capacitance of the capacitor can be detected by means of a transmitter/receiver unit (10) like that represented in figure 4b, using for example techniques already known, among which can be mentioned frequency tracking.

The techniques of frequency tracking are based on altering a transmitted frequency in a controlled manner, and recording a response (received signal) at that same frequency. This procedure is carried out over a range of frequencies or bandwidth, hence the name tracking. With it, it is possible to detect within the bandwidth of frequencies, a maximum or minimum reception level (depending on the parameter we are reading), determining a resonant frequency, which we will relate with the variations of the electric magnitudes on which our system is based.

In the diagram of figure 4b, the capacitive pressure sensor (2) and the conductive element (3) consisting of an antenna, form a resonant circuit which will depend on the capacitance of the capacitor and this in turn depends on the pressure to which the plates of the capacitor are being subjected in terms of the state of tightness of the fastening. It is a particular assembly, in which a magnetic coupling is implemented between transmitter/receiver and sensor and by means of a frequency "tracking" a minimum input impedance is found at a certain frequency. Knowing that frequency, the variations of electric magnitudes can be obtained, from which it will be possible to obtain the information we need.

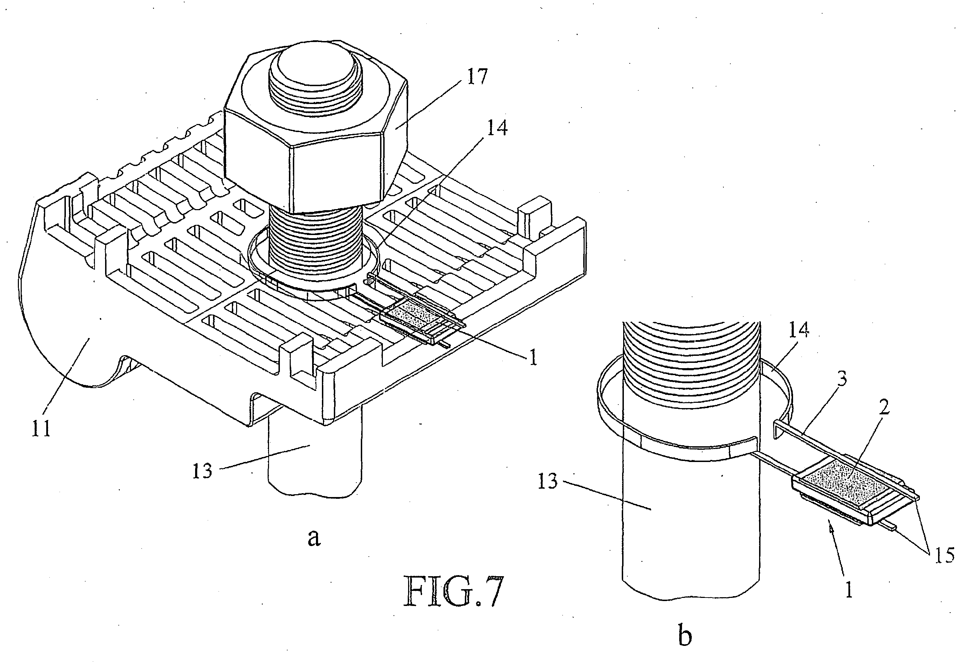

In the case of an insulating plate (11) represented in figure 7a, a capacitive pressure sensor (2) is used and the conductive element (3) consisting of an antenna which is arranged around an orifice (12) in the plate (11) for the passage of the screw (13) so that once the screw (13) is installed, the latter is arranged axially with respect to a loop (14) which forms the antenna. The antenna is connected to the electrodes (7) and (8) by means of arms (15). With the configuration of figure 7b, the screw (13) and the antenna are adapted so that the screw acts as a core of the loop, so that an electromagnetic radiation which is detected by the screw (3) is induced in the loop (14) of the antenna.

An expert in the matter can understand that any other type of pressure sensor element, which allows an instantaneous variation of pressure to be transformed into a variation of an electric magnitude, lies within the scope of this invention.

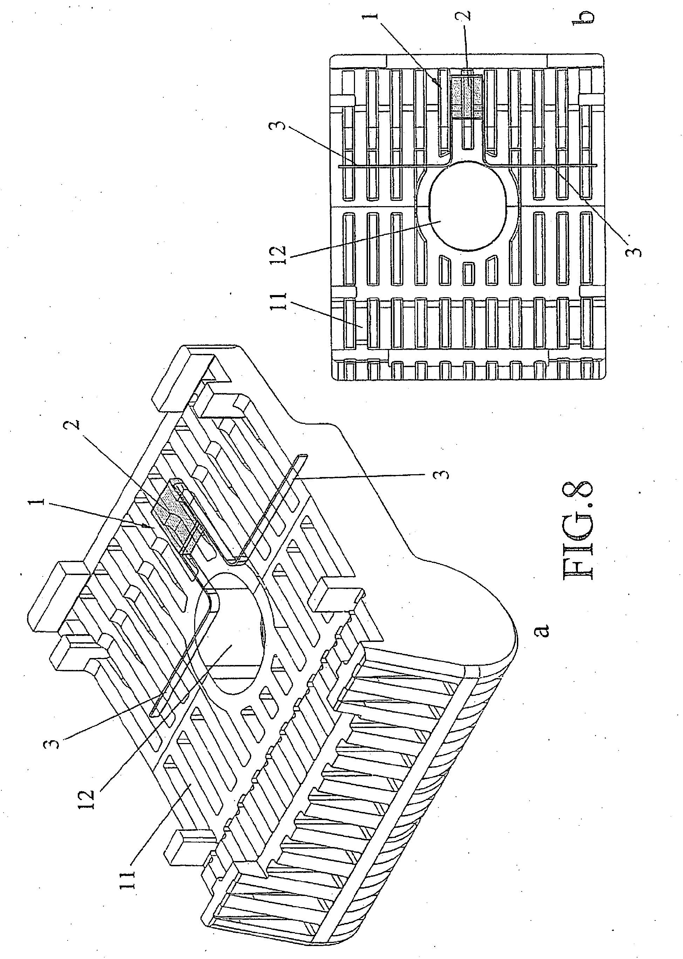

In figure 8 another (non-claimed) aspect of the invention is appreciated consisting of an insulating plate (11) for the fastening of rails on crossties which incorporates a sensor device (1) object of the invention, specifically the sensor device represented in figure 1. The insulating plate (11) can be molded in its manufacturing process on said device (1), being completely or partially embedded inside said plate. The sensor device (1) can adopt any position considered appropriate on the plate (11).

Alternatively, the insulating plate (11) can be manufactured separately but forming therein a cavity or housing (not shown), appropriate in form to receive later a sensor device (1) which can be fixed on the same by any known technique. In this case the sensor device (1) is at least partially accessible from the exterior of the plate (11).

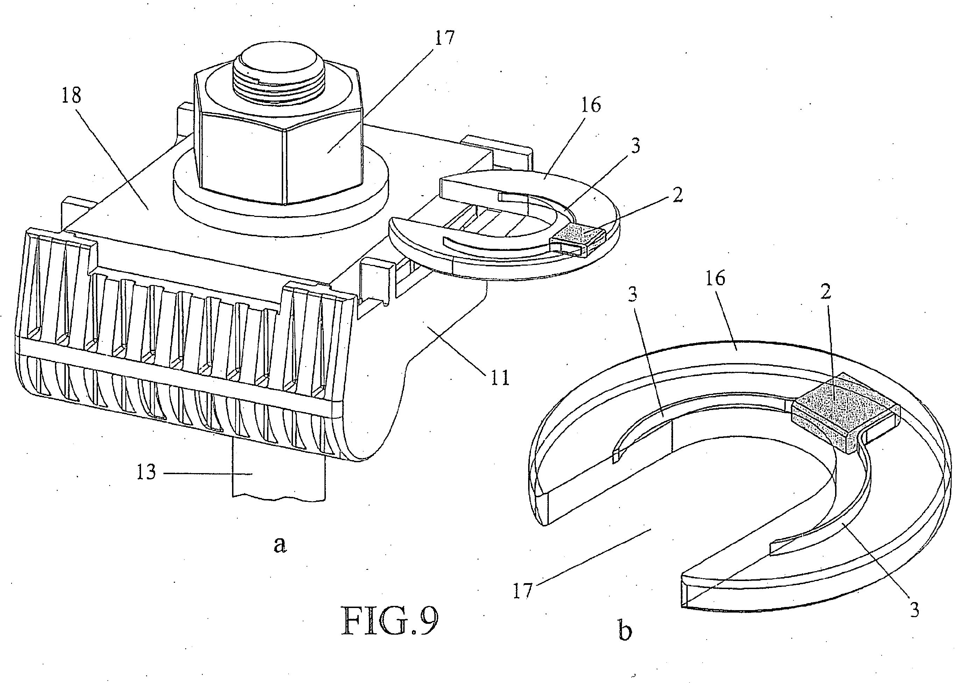

In another example of embodiment, the sensor device (1) can have an enclosure (16) inside which the sensor device (1) is housed, in this case a piezoelectric pressure sensor (2) and a conductive element (3) consisting of a dipole antenna formed by two bent arms. In this configuration the device is specially suitable for use in railway plant already existing, such as is indicated in figure 9a where an enclosure (16) is appreciated which like a washer can be coupled between a nut (17) and a metallic reinforcement plate (18) remaining pressed between both elements. For this purpose, the enclosure (16) can have a ring shape with a central hole for the passage of the screw (13) after undoing the nut (17), or as is the case of figure 9 it can have a (U) shape having an opening (17) which allows the coupling thereof by simply loosening the nut (17), but without having to remove it totally.

The enclosure (16) simplifies the manipulation and installation of the sensor device, at the same time as it protects it from accidental damage.

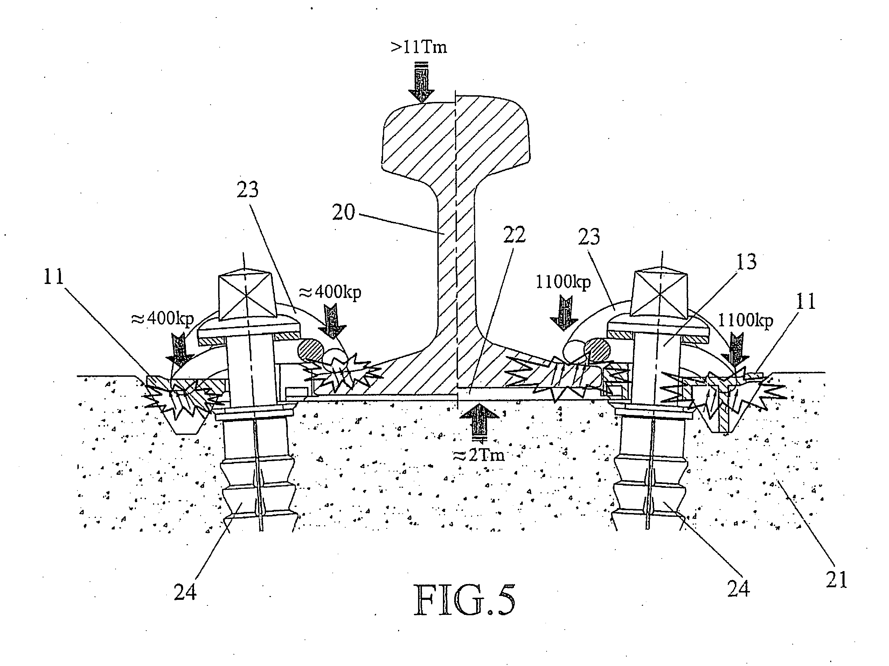

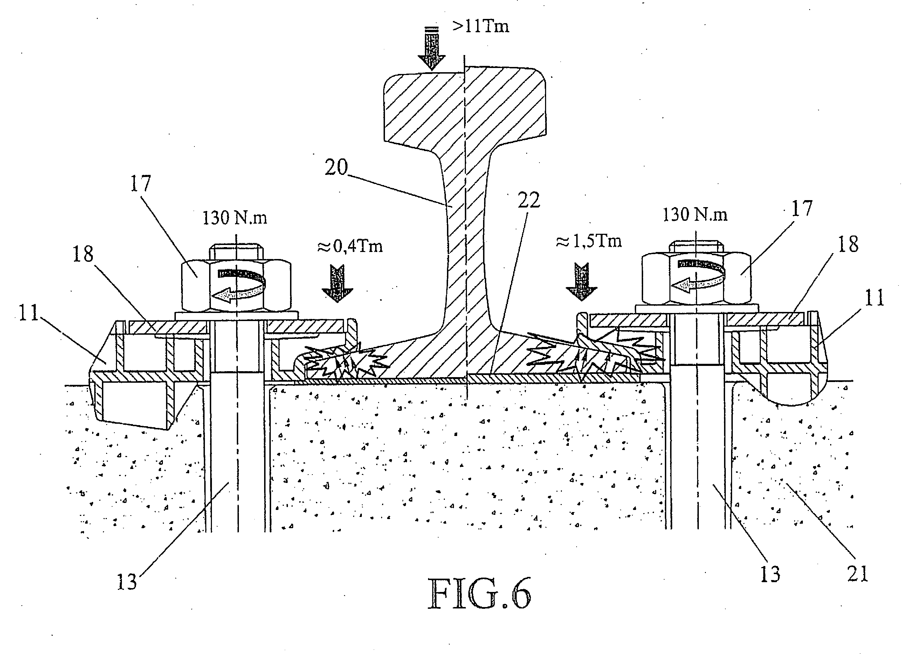

Another aspect of the invention relates to railroad plant like that represented in figures 5 and 6, and which incorporates a sensor device (1) like that defined in any one of the enclosed claims relative to said device, be it mounted independently or as an integral part of the insulating plate (11). The aforesaid railroad plant in the light of figures 5 and 6, comprises a rail (20) mounted on a crosstie (21) in cooperation with an insulating fastening plate (11) on each side of the rail (20) and in cooperation with individual screws (13) passing through said plates (11) and fixed in the crossties (21). The bottom of the rail (20) rests on the crosstie (21) through a resilient sole plate (22).

In the case of figure 5, the insulating plate (11) is of the CLIP type which is used together with individual resilient clips (23) which make contact with the bottom of the rail (20) for the fastening thereof. The screws (13) are threaded into the crosstie (21) by means of respective threaded anchor sheaths (24). In the case of figure 6 insulating plates (11) of the Resilient Sheet type are used which contact directly with the bottom of the rail (20). The screws (13) retain said plates (11) by means of nuts (17) threaded on their upper end and metallic reinforcement plates (18).

In the present invention the term "fastenings" has to be understood as the collection of elements which allow the securing in a point of a rail or line to a crosstie. For the particular case of figure 5 the fastening is formed by the elements: insulating plate (11), screw (13), threaded sheath (24) and clip (23), and for the case of figure 6 the fastening is formed by the elements: insulating plate (11), screw (13), nut (17) and metallic Resilient Sheet (18). It will be evident for an expert in the matter that the invention is equally applicable to any other types of fastening formed by other elements.

Conventionally when the track is laid, on each side of the line or rail (20) individual screws (13) are tightened, which cross through the insulating plate (11). By way of example with regard to the insulating plates of the Resilient Sheet fastening (figure 6), said screws (13) are tightened to a torque of 130 N-m (Newton-meter) which gives a load of approximately 4 Tm (metric ton), said load being distributed between the crosstie and the rail in equal parts, since the screw is approximately in the center of the insulating fastening plate (11). Thus, the application of these approximately 4 Tm, two on each side, compress initially a rubber pad the resilient sole plate (22) approximately 0.2 mm, which plate is located between the rail (20) and the crosstie (21). When a locomotive passes over a fastening, it applies a load thereon of 11 Tm (22 Tm per axle of the train wheels) which causes this pad or resilient sole plate (22) to be compressed to an approximate total value of 1 mm. Under these conditions, it can be said that the resilient sole plate (22) which had accumulated an energy equivalent to a load of 4 Tm passes to have 11 Tm.

When the locomotive disappears from the point of the fastening, if the screws are tight, the pad or resilient seating plate, will return to its initial compression of approximately 0.2 mm, whereby the fastenings will receive an impact of approximately 4 Tm. Said impact against the pressure sensor (2) located in an appropriate point of the fastening, in the case of being a piezoelectric sensor, produces a change of electric magnitudes with the provision of energy, which on closing the circuit through the conductive and radiant element (3), produces in turn an electromagnetic pulse which is transmitted to a receiving unit located for example in the train itself. If the tightness pressure of the fastening fails to reach an established value, for example because it is loose, deteriorated or damaged, the impact against the piezoelectric is not produced with the intensity established for a fastening in perfect condition, which is reflected in the variation of an electric magnitude, either in the form of a variation in the amplitude of a signal, frequency, etc.

For the case of a capacitive sensor, a generating set is needed to produce an electromagnetic signal which once transmitted to the energy reception system will transform the electromagnetic field into energy to know the state of the capacitive sensor and to transmit it by means of another electromagnetic field to the detector located in the train.

On the underside of the train there will be a probe or electromagnetic detector (approximately at 60 cm) from the level of the ground, which when it passes (approximately 91 crossties per second when the speed is approximately 200 km/hour), will be able to detect the disturbance of said electromagnetic field if it is present, transmitting said signal to the transmitter/receiver equipped on the train, locating automatically in place and time the proper or deficient state of the fastenings. In the event that disturbance of the radiofrequency signal does not occur or is not produced in the degree established, the signal to be detected will be different and therefore it would be likewise detectable. A suitable software program in the transmitter/receiver will transform this state into user language, automatically reporting the condition in which the securing fittings are found tie by tie.

The solution can be viable both in insulating plate fastenings and in bent plate with clip solutions, without discarding other types of securing different to the aforementioned which could arise in the future.

In the railroad installation the pressure sensor is in contact with the insulating plate and the crosstie, or between the insulating plate and the rail, or between the insulating plate and a fastening clip. In greater detail, when the sensor device (1) is installed independently, the pressure sensor (2), be it piezoelectric or a capacitive sensor, can be mounted under the nut (17) which accompanies the screw (13) for example inserted in a washer or enclosure (16) as is shown in figure 9a. In the case of the fastenings of the bent insulating plate type (11) with clip, the pressure sensor (1) can be located under the supporting point of the spring or clip (23) with respect to the bottom of the rail (20) or with respect to the plate (11) as indicated by the thin arrows of figure 5.

In the event that the sensor device (1) is embedded in the insulating plate (11), the pressure sensor (2) can be located between the plate (11) itself and the bottom of the rail (20) as indicated by the thin arrows of figure 6, or even between the insulating plate (11) itself and the metallic sheet (18) which is mounted in the upper segment thereof when securing in position. In all cases the effect is the same, since the tightening load of the screw (13) is distributed in equal parts, approximately 2 Tm on the crosstie and approximately 2 Tm on the rail.

Regarding the signals transmitted from the devices located in the fastenings of the track to the receiver located in the train, a difficulty can exist relative to the screening resulting from the ground plane of the train, of the rail or any nearby element and even by metallic elements of the train, to overcome these problems it is convenient that the transmission from the point located in the fastening to the receiver mounted in the train be made by pointing and directing the signal in an appropriate manner.

To record in the transmitter to what specific crosstie the received signal belongs, different means can be used, like the railroad localization means already present in the railroad centers, by GPS, by revolution counters according to the ratio of train speed to distance between crossties, etc.

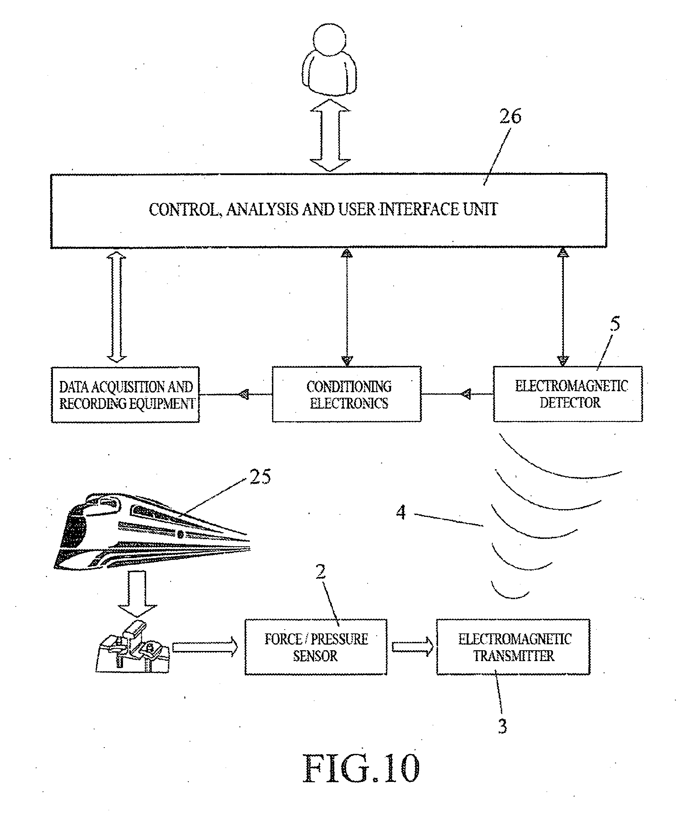

Figure 10 shows a schematic diagram illustrating the method for confirmation of the state of tightness of fastenings of railroad tracks, based on a self-powered system, that is, when a piezoelectric sensor is used. The passage of a train (25) over a fastening of the track supplies the necessary pressure to the piezoelectric sensor so that the latter produces an energy pulse which is transformed into an electromagnetic signal by means of the antenna (4), which signal is detected by a receiver or electromagnetic detector (5), which can be located in the train (25) itself whereby the acquisition of signals from the fastenings of all the crossties on an itinerary can be made from the train itself during the normal course of its journey. The receiver or electromagnetic detector (5) can belong to a unit for control, analysis and interface with the user (26) in which the signal detected is processed appropriately.

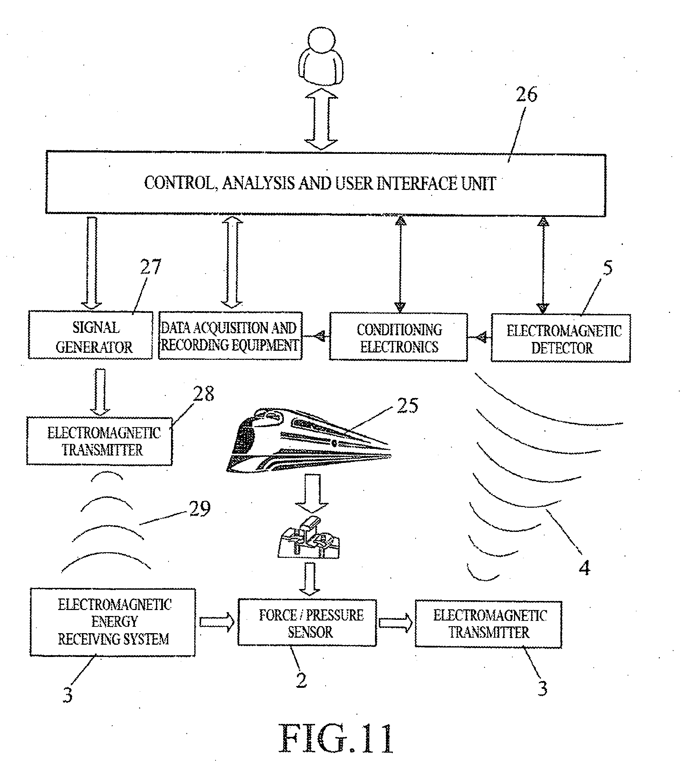

In the case of figure 11 the method is based on an externally powered system, that is, it uses a capacitive sensor and an electromagnetic transmitting unit necessary for powering the sensor. In this system the unit for control, analysis and interface with the user (26), which can be likewise installed in the train (25), employs a generator (27) to produce electromagnetic energy which is radiated by an electromagnetic transmitter (28), like an antenna or a loop for example. The electromagnetic signal (29) produced is received by the sensor device (1) installed in the fastening, specifically the signal (29) is detected by the conductive element (3) which converts it into energy in order to know the state of the pressure sensor (2) in this case capacitive, and to transmit it by means of another electromagnetic signal (30). Preferably it is possible to use the same conductive element (3) consisting of an antenna for energy reception and signal transmission. Therefore at least one magnitude of the electromagnetic signal (30) produced is variable in terms of the capacitance of the pressure sensor (2) consisting in this case of a variable capacitor, which in turn is proportional to or indicative of the pressure of tightness present in at least one point in said fastening during the passage of a train.

Diverse possibilities of practical embodiments of the invention are described in the enclosed dependent claims.

In the light of this description and set of figures, an expert in the matter will be able to understand that the embodiments of the invention which have been described can be combined in multiple ways within the object of the invention. The invention has been described according to some preferred embodiments of the same, but for the expert in the matter it will be evident that multiple variations can be introduced in said preferred embodiments without exceeding the object of the claimed invention.

## Claims

1. Railroad plant comprising rails (20) mounted on crossties (21) in cooperation with fastenings (11,13,17,18,23) for securing the rails to the crossties, said fastenings (11,13,17,18,23) comprising insulating fastenings plates (11) and screws (13) passing through said plates (11) and fixed in the crossties, the railroad plant further comprising a resilient sole plate (22) provided between the bottom of a rail and a crosstie, so that the rail (20) rests on the crosstie (21) through said resilient sole plate (22),
**characterized in that** the railroad plant further comprises at least one sensor device (1) for checking the state of tightness of said fastenings, said sensor device (1) comprising a pressure sensor element (2) formed by a piezoelectric material, and an electrically conducting element (3) electrically connected to the pressure sensor element (2) for radiating electromagnetic energy produced by said pressure sensor (2),
wherein said pressure sensor element (2) is located in a point of said fastenings, in such a manner that the electrically conducting element (3) produces an electromagnetic pulse proportional to the magnitude of an impact of force against the pressure sensor element (2) caused by the compression-relaxation of the resilient sole plate (22) after a wheel of a train has passed over the fastening means in which the pressure sensor (2) is located.

2. Railroad plant according to claim 1 wherein said impact of force against the pressure sensor is caused by the return of the resilient sole plate (22) to its initial compression state, after a wheel of a train has passed on the fastening means in which the pressure sensor element (2) is located.

3. Railroad plant according to claim 1 wherein the pressure sensor element (2) and the electrically conducting element (3) are both located in conjunction with the fastenings.

4. Railroad plant according to claim 1 wherein said fastenings comprises an insulating fastening plate (11) and a screw (13) passing through said plate (11) and fixed to the crossties (21), and a resilient clip (23) which makes contact with the bottom of the rail (20) for the fastening thereof.

5. Railroad plant according to claim 1 wherein said fastenings comprises an insulating fastening plate (11) and a screw (13) passing through said plate (11) and fixed to the crosstie (21), the screw (13) retains said plate (11) by means of a nut (17) threaded on the upper end of the screw and by means of a metallic reinforcement plate (18).

6. Railroad plant according to claim 4 or 5 wherein the sensor device is incorporated in the insulating plate (11).

7. Railroad plant according to claim 4 wherein the pressure sensor element (2) is in contact with the insulating plate (11) and the crosstie (21), or between the insulating plate (11) and the rail (20), or between the insulating plate (11) and a fastening clip (23).

8. Railroad plant according to claim 4 wherein the pressure sensor element (2) is located under the supporting point of the resilient clip (23) with respect to the bottom of the rail (20).

9. Railroad plant according to claim 1 **characterized in that** the radiating element is selected among: an antenna, electrode, plate, open or closed loop, coil, a layer of conducting ink or paste.

10. Railroad plant according to claim 9 **characterized in that** the radiating element is an antenna selected among: monopole, dipole, vertical monopole, dipole parallel to a conductive plane, frame antenna, loop antenna, coplanar antenna, radiofrequency antenna, planar antenna, or printed antenna.

11. Railroad plant according to anyone of the previous claims **characterized in that** it comprises an enclosure (16) and **in that** the sensor element and the radiating element are housed inside said enclosure.

12. Railroad system comprising a railroad plant according to any of the preceding claims and at least one railroad vehicle (25) meant to run on the rails of said railroad plant, wherein the railroad system further comprises a receiving unit (5) installed in said railroad vehicle (25), wherein said receiving unit (5) is adapted for sensing said electromagnetic pulse.

13. Method for confirmation of the state of tightness of fastenings of railroad plants, said railroad plant comprising rails (20) mounted on crossties (21) in cooperation with fastenings for securing the rails to the crossties, and a resilient sole plate (22) provided between the bottom of a rail and a crosstie, so that the rail (20) rests on the crosstie (21) through said resilient sole plate (22),
**characterized in that** the method comprises producing emission of electromagnetic pulses proportional to the pressure of tightness present in at least one point in said fastenings after the passage of a wheel of a railroad vehicle (25), wherein said electromagnetic pulses are produced by means of a electrically conducting element (3) connected with a pressure sensor (2), wherein the pressure sensor is a material with piezoelectric properties and **in that** said electromagnetic pulses are produced by subjecting said piezoelectric material to an impact of force from the passage of the train,
wherein said pressure sensor element (2) is located in a point of said fastenings, in such a manner that the electrically conducting element (3) produces an electromagnetic pulse proportional to the magnitude of an impact of force against the pressure sensor element (2) caused by the compression-relaxation of the resilient sole plate (22) after a wheel of a train has passed over the fastening means in which the pressure sensor (2) is located.

14. Method according to claim 14 wherein said impact of force, against the pressure sensor is caused by the return of the resilient sole plate (22) its initial compression state, after a wheel of a train has passed on the fastenings in which the pressure sensor element (2) is located.

15. Method according to claim 14 **characterized in that** it comprises detecting said emission of electromagnetic energy by means of a receiving unit (5) located in a railroad vehicle (25) that is traveling on the rails.

## Patentansprüche

1. Eisenbahnanlage, die Schienen (12) umfasst, die an Schwellen (21) im Zusammenwirken mit Befestigungseinrichtungen (11, 13, 17, 18, 23) zum Befestigen der Schienen an den Schwellen angebracht sind, wobei die Befestigungseinrichtungen (11, 13, 17, 18, 23) isolierende Befestigungsplatten (11) und Schrauben (13) umfassen, die durch die Platten (11) hindurchtreten und an den Schwellen befestigt sind, und die Eisenbahnanlage des Weiteren eine elastische Unterlagsplatte (22) umfasst, die zwischen der Unterseite einer Schiene und einer Schwelle so vorhanden ist, dass die Schiene (20) über die elastische Unterlagsplatte (22) auf der Schwelle (21) aufliegt,
**dadurch gekennzeichnet, dass** die Eisenbahnanlage des Weiteren wenigstens eine Sensoreinrichtung (1) zum Prüfen des Anziehzustandes der Befestigungseinrichtung umfasst, wobei die Sensoreinrichtung (1) ein Drucksensorelement (2), das durch ein piezoelektrisches Material gebildet wird, und ein elektrisch leitendes Element (3) umfasst, das elektrisch mit dem Drucksensorelement (2) verbunden ist, um durch den Drucksensor (2) erzeugte elektromagnetische Energie auszustrahlen,
wobei sich das Drucksensorelement (2) so an einem Punkt der Befestigungselemente befindet, dass das elektrisch leitende Element (3) einen elektromagnetischen Impuls erzeugt, der proportional zur Stärke eines Kraftstoßes gegen auf das Drucksensorelement (2) ist, der durch das Zusammendrücken und Entspannen der elastischen Unterlagsplatte (22) verursacht wird, nachdem ein Rad eines Zuges über die Befestigungseinrichtung gerollt ist, in der sich der Drucksensor (2) befindet.

2. Eisenbahnanlage nach Anspruch 1, wobei der Kraftstoß gegen den Drucksensor durch das Zurückkehren der elastischen Unterlagsplatte (22) in ihren ursprünglichen Zusammendrückzustand verursacht wird, nachdem ein Rad eines Zuges über die Befestigungseinrichtung gerollt ist, in der sich das Drucksensorelement (2) befindet.

3. Eisenbahnanlage nach Anspruch 1, wobei sich das Drucksensorelement (2) und das elektrisch leitende Element (3) beide in Verbindung mit den Befestigungseinrichtungen befinden.

4. Eisenbahnanlage nach Anspruch 1, wobei die Befestigungseinrichtungen eine isolierende Befestigungsplatte (11) sowie eine Schraube (13), die durch die Platte (11) hindurchtritt und an den Schwellen (21) befestigt ist, und eine elastische Klemme (23) umfassen, die mit der Unterseite der Schiene (20) in Kontakt ist, um sie zu befestigen.

5. Eisenbahnanlage nach Anspruch 1, wobei die Befestigungseinrichtungen eine isolierende Befestigungsplatte (11) sowie eine Schraube (13), die durch die Platte (11) hindurchtritt und an der Schwelle (21) befestigt ist, wobei die Schraube (13) die Platte (11) mittels einer Mutter (17), die auf das obere Ende der Schraube aufgeschraubt ist, sowie mittels einer Verstärkungsplatte (18) aus Metall hält.

6. Eisenbahnanlage nach Anspruch 4 oder 5, wobei die Sensoreinrichtung in die isolierende Platte (11) integriert ist.

7. Eisenbahnanlage nach Anspruch 4, wobei das Drucksensorelement (2) in Kontakt mit der isolierenden Platte (11) und der Schwelle (21) ist oder sich zwischen der Isolierende Platte (11) und der Schiene (20) oder zwischen der isolierenden Platte (11) und einer Befestigungsklemme (23) befindet.

8. Eisenbahnanlage nach Anspruch 4, wobei das Drucksensorelement (2) unter dem Auflagepunkt der elastischen Klemme (23) in Bezug auf die Unterseite der Schiene (20) angeordnet ist.

9. Eisenbahnanlage nach Anspruch 1, **dadurch gekennzeichnet, dass** das strahlende Element aus einer Antenne, Elektrode, Platte, offenem oder geschlossenem Kreis, Spule, einer Schicht aus leitender Tinte oder Paste ausgewählt wird.

10. Eisenbahnanlage nach Anspruch 9, **dadurch gekennzeichnet, dass** das strahlende Element eine Antenne ist, die aus Monopol, Dipol, Vertikal-Monopol, Dipol parallel zu einer leitenden Ebene, Rahmenantenne, Schleifenantenne, koplanarer Antenne, Funkfrequenzantenne, planarer Antenne oder gedruckter Antenne ausgewählt wird.

11. Eisenbahnanlage nach einem der vorangehenden Ansprüche, **dadurch gekennzeichnet, dass** es ein Gehäuse (16) umfasst und dass das Sensorelement sowie das strahlende Element im Inneren des Gehäuses aufgenommen sind.

12. Eisenbahnsystem, das eine Eisenbahnanlage nach einem der vorangehenden Ansprüche und wenigstens ein Schienenfahrzeug (25) umfasst, das zum Fahren auf den Schienen der Eisenbahnanlage bestimmt ist, wobei das Eisenbahnsystem des Weiteren eine Empfangseinheit (5) umfasst, die in dem Schienenfahrzeug (25) installiert ist, und die Empfangseinheit (5) zum Erfassen des elektromagnetischen Impulses eingerichtet ist.

13. Verfahren zum Bestätigen des Anziehzustandes von Befestigungselementen von Eisenbahnanlagen, wobei die Eisenbahnanlage Schienen (20), die an Schwellen (21) im Zusammenwirken mit Befestigungselementen zum Befestigen der Schienen an den Schwellen angebracht sind, sowie eine elastische Unterlagsplatte (22) umfasst, die zwischen der Unterseite einer Schiene und einer Schwelle so vorhanden ist, dass die Schiene (20) über die elastische Unterlagsplatte (22) auf der Schwelle (21) aufliegt, **dadurch gekennzeichnet, dass** das Verfahren Erzeugen von Emission elektromagnetischer Impulse proportional zum Anziehdruck an wenigstens einem Punkt der Befestigungselemente nach dem Überrollen durch ein Rad eines Schienenfahrzeugs (25) umfasst, wobei die elektromagnetischen Impulse mittels eines elektrisch leitenden Elementes (3) erzeugt werden, das mit einem Drucksensor (2) verbunden ist, und der Drucksensor ein Material mit piezoelektrischen Eigenschaften ist, und dadurch, dass die elektromagnetischen Impulse erzeugt werden, indem das piezoelektrische Material einer Aufschlagkraft von der Durchfahrt des Zuges ausgesetzt wird,
wobei sich das Drucksensorelement (2) so an einem Punkt der Befestigungselemente befindet, dass das elektrisch leitende Element (3) einen elektromagnetischen Impuls erzeugt, der proportional zur Stärke eines Kraftstoßes gegen das Drucksensorelement (2) ist, der durch das Zusammendrücken und Entspannen der elastischen Unterlagsplatte (22) verursacht wird, nachdem ein Rad eines Zuges über die Befestigungseinrichtung gerollt ist, in der sich der Drucksensor (2) befindet.

14. Verfahren nach Anspruch 14, wobei der Kraftstoß gegen den Drucksensor durch das Zurückkehren der elastischen Unterlagsplatte (22) in ihren ursprünglichen Zusammendrückzustand verursacht wird, nachdem ein Rad eines Zuges über die Befestigungseinrichtung gerollt ist, in der sich das Drucksensorelement (2) befindet.

15. Verfahren nach Anspruch 14, **dadurch gekennzeichnet, dass** es Erfassen der Emission elektromagnetischer Energie mittels einer Empfangseinheit (5) umfasst, die sich in einem Schienenfahrzeug (25) befindet, das auf den Schienen fährt.

## Revendications

1. Réseau ferré composé de rails (20) installés sur des traverses (21) en coopérant avec des moyens de fixation (11, 13, 17, 18, 23) pour fixer les rails aux traverses, les moyens de fixation (11, 13, 17, 18, 23) comportant des plaques de fixation isolantes (11) et des vis (13) traversant les plaques (11) étant fixées aux traverses, l'installation comportant en outre une plaque de semelle élastique (22) entre le dessous du rail et la traverse, de façon que le rail (20) repose sur la traverse (21) par l'intermédiaire de la plaque de semelle élastique (22),
installation **caractérisée en ce qu'**
elle comporte en outre au moins un capteur (1) pour contrôler l'état de serrage des moyens de fixation,
- le capteur (1) comportant un élément capteur de pression (2) en matière piézo-électrique et un élément électroconducteur (3) relié électriquement au capteur de pression (2) pour rayonner l'énergie électromagnétique produite par le capteur de pression (2),
- le capteur de pression (2) étant situé à un point des moyens de fixation, de façon que l'élément électroconducteur (3) génère une impulsion électromagnétique proportionnelle à l'amplitude de l'impact de la force contre le capteur de pression (2) engendré par la compression-relaxation de la plaque de semelle élastique (22) après le passage d'une roue d'un train au-dessus du moyen de fixation où se trouve le capteur de pression (2).

2. Installation selon la revendication 1,
dans laquelle
l'impact de la force contre le capteur de pression est engendré par le retour de la plaque de semelle élastique (22) à son état de compression initial après le passage de la roue du train sur le moyen de fixation dans lequel est situé le capteur de pression (2).

3. Installation selon la revendication 1,
**caractérisée en ce que**
le capteur de pression (2) et l'élément électroconducteur (3), sont tous deux situés à la jonction des moyens de fixation.

4. Installation selon la revendication 1,
**caractérisée en ce que**
le moyen de fixation comporte une plaque de fixation isolante (11) et une vis (13) traversant la plaque (11) en étant fixée à la traverse (21), ainsi qu'une pince élastique (23) qui fait le contact avec la base du rail (20) pour sa fixation.

5. Installation selon la revendication 1,
**caractérisée en ce que**
le moyen de fixation comporte une plaque de fixation isolante (11) et une vis (13) traversant la plaque (11) en étant fixée à la traverse (21), la vis (13) retenant la plaque (11) par l'intermédiaire d'un écrou (17) vissé sur l'extrémité supérieure de la vis et par l'intermédiaire d'une plaque de renforcement métallique (18).

6. Installation selon la revendication 4 ou 5,
**caractérisée en ce que**
le capteur est intégré dans la plaque d'isolation (11).

7. Installation selon la revendication 4,
**caractérisée en ce que**
le capteur de pression (2) est en contact avec la plaque isolante (11) et la traverse (21) ou encore se trouve entre la plaque isolante (11) et le rail (20) ou entre la plaque isolante (11) et la pince de fixation (23).

8. Installation selon la revendication 4,
**caractérisée en ce que**
le capteur de pression (2) se trouve sous le point de support de la pince élastique (23) par rapport au fond du rail (20).

9. Installation selon la revendication 1,
**caractérisée en ce que**
l'élément rayonnant est choisi dans le groupe comprenant une antenne, une électrode, une plaque, une boucle ouverte ou fermée, une bobine, une couche conductrice ou une pâte.

10. Installation selon la revendication 9,
**caractérisée en ce que**
l'élément rayonnant est une antenne choisie entre une antenne mono-pôle, une antenne dipôle, une antenne verticale monopole, une antenne bipôle parallèle au plan conducteur, une antenne cadre, une antenne boucle, une antenne coplanaire, une antenne de radiofréquence, une antenne planaire ou une antenne imprimée.

11. Installation selon l'une quelconque des revendications précédentes,
**caractérisée en ce qu'**
elle comporte une enceinte (16), dans laquelle sont logés le capteur et l'élément rayonnant.

12. Installation selon l'une quelconque des revendications précédentes et au moins un véhicule ferroviaire (25) destiné à rouler sur les rails de l'installation ferroviaire,
**caractérisée en ce que**
le système de rails comporte en outre une unité de réception (5) installée dans le véhicule ferroviaire (25) et destinée à détecter l'impulsion électromagnétique.

13. Procédé de confirmation de l'état de serrage d'un moyen de fixation d'une installation de rails, l'installation comportant des rails (20) montés sur des traverses (21) en coopérant avec des moyens de fixation pour fixer les rails aux traverses, ainsi qu'une plaque de semelle élastique (22) entre le dessous d'un rail et une traverse pour que le rail (20) repose sur la traverse (21) par l'intermédiaire de la plaque de semelle élastique (22),
procédé **caractérisé en ce qu'**
il comprend les étapes suivantes :
- émettre les impulsions électromagnétiques proportionnelles à la pression du serrage en au moins un point des moyens de fixation après le passage d'une roue de véhicule ferroviaire (25),
- les impulsions électromagnétiques étant produites par un élément électroconducteur (3) relié à un capteur de pression (2) si le capteur de pression est en une matière ayant des caractéristiques piézoélectriques et les impulsions électromagnétiques sont produites en soumettant la matière piézo-électrique à l'impact d'une force lié au passage du train,
procédé selon lequel
- l'élément capteur de pression (2) est situé en un point du moyen de fixation tel que l'élément électroconducteur (3) génère une impulsion électromagnétique proportionnelle à l'amplitude de l'impact de la force contre le capteur de pression (2) engendré par la compression-relaxation de la plaque de semelle élastique (22) après le passage d'une roue d'un train sur le moyen de fixation situé au niveau du capteur de pression (2).

14. Procédé selon la revendication 13,
**caractérisé en ce que**
l'impact de la force contre le capteur de pression est engendré par le retour de la plaque de semelle élastique (22) à son état de compression initial après le passage d'une roue du train sur le moyen de fixation dans lequel se trouve l'élément de capteur de pression (2).

15. Procédé selon la revendication 14,
**caractérisé en ce qu'**
il comporte la détection de l'émission d'énergie électromagnétique par une unité de réception (5) située dans le véhicule ferroviaire (25) pendant qu'il circule sur les rails.
